# EUROPEAN PATENT APPLICATION

(11) **EP 4 512 847 A1**
(43) Date of publication of application: **26.02.2025**
(21) Application number: 23791784.4
(22) Date of filing: 13.04.2023
(51) Int. Cl.: C08G 77/14, C07F 7/08, C08G 77/38

(54) **ALDEHYDE-MODIFIED SILICONE AND METHOD FOR PRODUCING SAME**

(30) Priority: 21.04.2022 JP 2022069978
(71) Applicant: SHIN-ETSU CHEMICAL CO., LTD., Tokyo 1000005 (JP)
(72) Inventor: FUJITA Shoji, Annaka-shi, Gunma 379-0224 (JP)
(74) Representative: Angerhausen, Christoph
(86) International application number: PCT/JP2023/015014
(87) International publication number: WO 2023/204136

(57) **Abstract**

Provided are a high-purity aldehyde-modified silicone and a method for producing the aldehyde-modified silicone in which a competitive reaction in which a hydrosilyl group is added to a carbonyl group of an aldehyde does not proceed. An aldehyde-modified silicone having one or two aldehyde groups per molecule is represented by the following formula (1):
[Chem. 1]

(AR¹₂SiO_{1/2})₁(R¹₃SiO_{1/2})ₐ(R¹2SiO_{2/2})_{b}(R¹SiO_{3/2})_{c}(SiO_{4/2})_{d} (1)

wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200.

## Description

### Technical Field

The present invention relates to an aldehyde-modified silicone and a method for producing the aldehyde-modified silicone.

### Background Art

An aldehyde-modified silicone can react and bond with compounds having various polar functional groups such as hydroxy and amino groups. Accordingly, aldehyde-modified silicones have attracted attention as resin modifiers and feel improvers for cosmetics. However, synthesis routes of aldehyde-modified silicones are limited, and there are few examples in which aldehyde-modified silicones are manufactured through a large-scale industrial method.

As a simple method for producing an aldehyde-modified silicone, the hydrosilylation of an aldehyde containing an unsaturated carbon-carbon bond with a hydrosilyl group-functional siloxane is disclosed (Patent documents 1 and 2). Although this method is desirable in respect of, for example, high versatility of the hydrosilylation reaction, it unintentionally facilitates a competitive reaction in which a hydrosilyl group is added to a carbonyl group of an aldehyde. This results in a decrease in the yield and purity of the target aldehyde-modified silicone.

### PRIOR ART DOCUMENTS

### Patent documents

Patent document 1: JP-A-2008-505185
Patent document 2: JP-A-2009-501837

### Summary of Invention

### Technical Problem

Accordingly, an object of the present invention is to provide a high-purity aldehyde-modified silicone and a method for producing the aldehyde-modified silicone in which a competitive reaction in which a hydrosilyl group is added to a carbonyl group of an aldehyde does not proceed.

### Solution to Problem

The inventor has conducted a series of intensive studies to solve the foregoing problem and has consequently found a method for producing an aldehyde-modified silicone without allowing a competitive reaction in which a hydrosilyl group is added to a carbonyl group of an aldehyde group to proceed by using an oxidation reaction of a primary alcohol without using hydrosilylation, thus completing the present invention.

That is, the present invention provides the aldehyde-modified silicone and the method for producing the aldehyde-modified silicone as defined below.

<1> An aldehyde-modified silicone having one or two aldehyde groups per molecule, the aldehyde-modified silicone being represented by the following formula (1):
   [Chem. 1]

   (AR¹₂SiO_{1/2})₁(R¹₃SiO_{1/2})ₐ(R¹₂SiO_{2/2})_{b}(R¹SiO_{3/2})_{c}(SiO_{4/2})_{d} (1)

   wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200.
<2> The aldehyde-modified silicone according to <1>, wherein the aldehyde-modified silicone (1) is represented by the following formula (2): 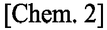 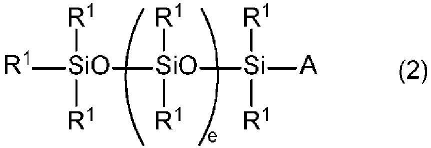 wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, and e is a number of 1 to 150.
<3> The aldehyde-modified silicone according to <1> or <2>, wherein A is a group selected from the following formulae (3) to (6): 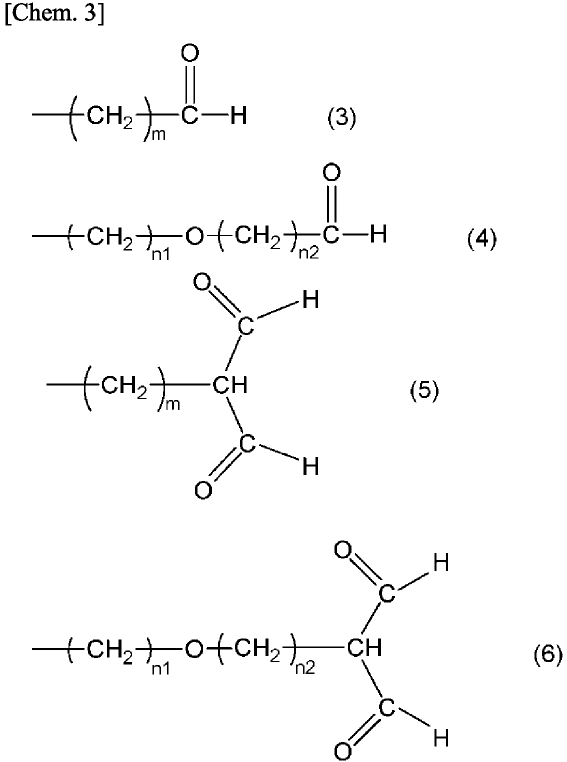 wherein m is independently a number of 2 to 20, n1 is independently a number of 3 to 8, and n2 is independently a number of 1 to 6.
<4> A method for producing an aldehyde-modified silicone represented by the following formula (1):
   [Chem. 4]

   (AR¹₂SiO_{1/2})₁(R¹₃SiO_{1/2})ₐ(R¹₂SiO_{2/2})_{b}(R¹SiO_{3/2})_{c}(SiO_{4/2})_{d} (1)

   wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200,
   the method comprising oxidizing a hydroxymethyl group of a carbinol-modified silicone to produce the aldehyde-modified silicone, said carbinol-modified silicone being represented by the following formula (7):
   [Chem. 5]

   (A'R¹₂SiO_{1/2})₁(R¹₃SiO_{1/2})ₐ(R¹₂SiO_{2/2})_{b}(R¹SiO_{3/2})_{c}(SiO_{4/2})_{d} (7)

   wherein A' is a linear or branched alkylene group (-R-) or alkyleneoxyalkylene group (-R-O-R-) having 2 to 20 carbon atoms and is an organic group having one or two hydroxymethyl groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200.
<5> The method for producing the aldehyde-modified silicone according to [4], wherein the aldehyde-modified silicone (1) is represented by the following formula (2): 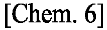 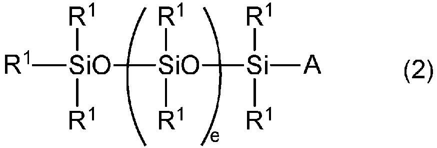 wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, and e is a number of 1 to 150.
<6> The method for producing the aldehyde-modified silicone according to <4> or <5>, wherein A is a group selected from the following formulae (3) to (6): 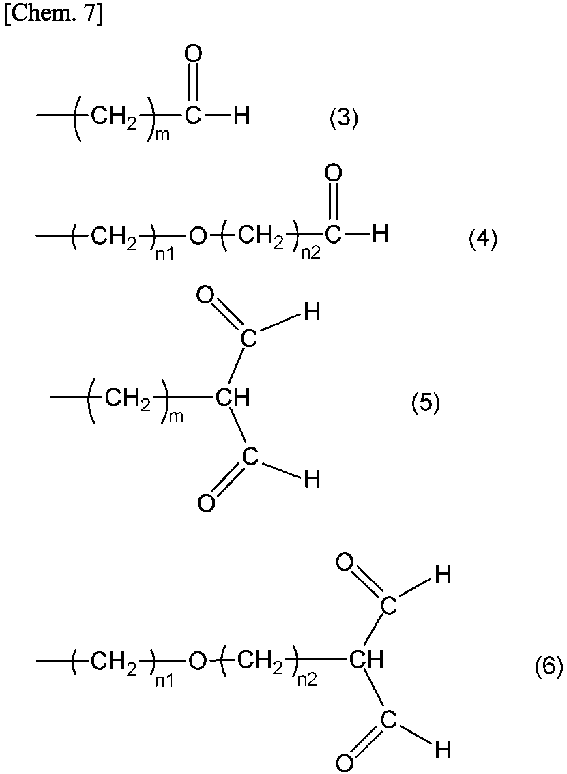 wherein m is independently a number of 2 to 20, n1 is independently a number of 3 to 8, and n2 is independently a number of 1 to 6.
<7> The method for producing the aldehyde-modified silicone according to any one of <4> to <6>, wherein a nitroxyl radical compound is used as an oxidant.

### Advantageous Effects of Invention

Because the aldehyde-modified silicone of the present invention is manufactured by using an oxidation reaction of a primary alcohol without using hydrosilylation, a competitive reaction in which a hydrosilyl group is added to a carbonyl group of an aldehyde does not occur. Thus, a high-purity aldehyde-modified silicone can be manufactured in high yield and can be used as a material for resin modifiers and feel improvers for cosmetics.

### Description of Embodiments

The present invention will be described in detail below.

### [Aldehyde-Modified Silicone]

An aldehyde-modified silicone of the present invention is represented by the following formula (1) and is preferably represented by the following formula (2):

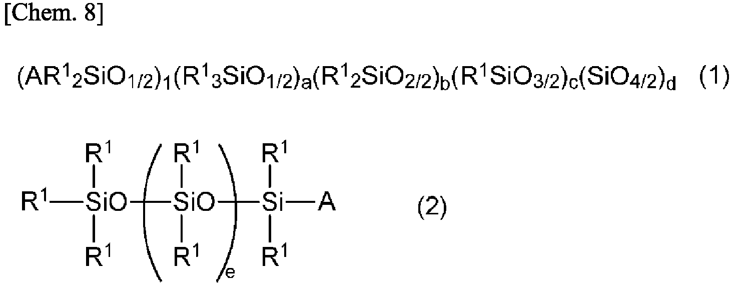

In the formulae (1) and (2), R¹ is independently a group selected from an alkyl group having 1 to 10 carbon atoms, an aryl group having 6 to 10 carbon atoms, and an aralkyl group having 7 to 10 carbon atoms. Examples of alkyl groups having 1 to 10 carbon atoms include alkyl groups such as a methyl group, an ethyl group, a propyl group, and a butyl group; and cycloalkyl groups such as a cyclopentyl group and a cyclohexyl group. Examples of aryl groups having 6 to 10 carbon atoms include a phenyl group, a tolyl group, a xylyl group, and a naphthyl group. Examples of aralkyl groups having 7 to 10 carbon atoms include a benzyl group and a phenethyl group. Of these, R¹ is preferably a methyl group, a butyl group, a phenyl group, or a benzyl group, more preferably a methyl group or a butyl group.

In the formula (1), a is 0 < a ≤ 3, preferably 0 < a ≤ 1, b is 0 < b ≤ 200, preferably 1 ≤ b ≤ 100, more preferably 5 ≤ b ≤ 60, c is 0 ≤ c ≤ 1, preferably 0, and d is 0 ≤ d ≤ 1, preferably 0, provided that 1 ≤ a + b + c + d ≤ 200, preferably 1 ≤ a + b + c + d ≤ 100, more preferably 5 ≤ a + b + c + d ≤ 60.

In addition, in the formula (2), e is a number of 1 to 150, preferably 1 to 100, more preferably 5 to 60.

In the formulae (1) and (2), A is a linear or branched alkylene group (-R-) having 2 to 20 carbon atoms or a linear or branched alkyleneoxyalkylene group (-R-O-R-) having 2 to 20 carbon atoms and is an organic group having one or two aldehyde groups at an end thereof. Examples of alkylene groups having 2 to 20 carbon atoms include an ethylene group, a trimethylene group, a tetramethylene group, a pentamethylene group, a hexamethylene group, a heptamethylene group, an octamethylene group, a nonamethylene group, and a decamethylene group. More preferably, A is a group selected from the following formulae (3) to (6): 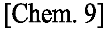 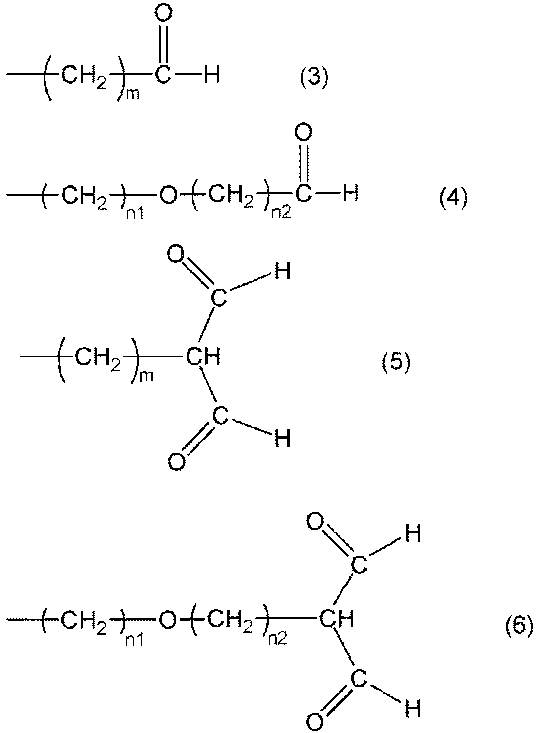 wherein, in the formulae (3) to (6), m is independently a number of 2 to 20, preferably 2 to 10, n1 is independently a number of 3 to 8, preferably 3 to 4, n2 is independently a number of 1 to 6, preferably 1 to 3. It is noted that the number of carbon atoms in A does not include the number of carbon atoms in the aldehyde groups or to which the aldehyde groups are bonded.

### [Method for Producing Aldehyde-Modified Silicone]

A method for producing the aldehyde-modified silicone of the present invention (which may be hereinafter simply referred to as "production method of the present invention") includes a step of oxidizing a hydroxy group of a carbinol-modified silicone represented by the following formula (7).

The production method of the present invention allows production of the aldehyde-modified silicone of the present invention represented by the above-defined formula (1) or (2).
[Chem. 10]

(A'R¹₂SiO_{1/2})₁(R¹₃SiO_{1/2})ₐ(R¹₂SiO_{2/2})_{b}(R¹SiO_{3/2})_{c}(SiO_{4/2})_{d} (7)

In the formula (7), R¹ is independently a group selected from an alkyl group having 1 to 10 carbon atoms, an aryl group having 6 to 10 carbon atoms, and an aralkyl group having 7 to 10 carbon atoms. Examples of alkyl groups having 1 to 10 carbon atoms include alkyl groups such as a methyl group, an ethyl group, a propyl group, and a butyl group; and cycloalkyl groups such as a cyclopentyl group and a cyclohexyl group. Examples of aryl groups having 6 to 10 carbon atoms include a phenyl group, a tolyl group, a xylyl group, and a naphthyl group. Examples of aralkyl groups having 7 to 10 carbon atoms include a benzyl group and a phenethyl group. Of these, R¹ is preferably a methyl group, a butyl group, a phenyl group, or a benzyl group, more preferably a methyl group or a butyl group.

In the formula (7), a is 0 < a ≤ 3, preferably 0 < a ≤ 1, b is 0 < b ≤ 200, preferably 1 ≤ b ≤ 100, more preferably 5 ≤ b ≤ 60, c is 0 ≤ c ≤ 1, preferably 0, and d is 0 ≤ d ≤ 1, preferably 0, provided that 1 ≤ a + b + c + d ≤ 200, preferably 1 ≤ a + b + c + d ≤ 100, more preferably 5 ≤ a + b + c + d ≤ 60.

In the formula (7), A' is a linear or branched alkylene group (-R-) or alkyleneoxyalkylene group (-R-O-R-) having 2 to 20 carbon atoms and is an organic group having one or two hydroxymethyl groups at an end thereof. Examples of alkylene groups having 2 to 20 carbon atoms include an ethylene group, a trimethylene group, a tetramethylene group, a pentamethylene group, a hexamethylene group, a heptamethylene group, an octamethylene group, a nonamethylene group, and a decamethylene group. It is noted that the number of carbon atoms in A' does not include the number of carbon atoms in the hydroxymethyl groups or to which the hydroxymethyl groups are bonded.

In the production method of the present invention, a nitroxyl radical compound is preferably used as an oxidant. In particular, 2,2,6,6-tetramethylpiperidine N-oxyl, 1-methyl-2-azaadamantane N-oxyl, 2-azaadamantane N-oxyl, 9-azabicyclo[3.3.1]nonane N-oxyl, 9-norazaadamantane N-oxyl, and the like are preferred.

The amount of oxidant used in the production method of the present invention is not particularly limited and is selected as appropriate depending on the purpose. Preferably, the amount of oxidant used is 1 × 10⁻⁶ mol to 1 mol, more preferably 1 × 10⁻⁵ mol to 0.05 mol, most preferably 1 × 10⁻³ mol to 0.05 mol, per mole of hydroxymethyl groups in the carbinol-modified silicone represented by the formula (7).

In the production method of the present invention, it is preferred that a compound known as "reoxidant", which can restore the oxidation ability of the oxidant consumed in the reaction system, be additionally used in combination. Examples of reoxidants used include peroxy acids, hydrogen peroxide, hypohalous acids and salts thereof, perhalous acids and salts thereof, persulfate salts, halides, halogenating agents such as N-bromosuccinimide, trihalogenated isocyanuric acids such as trichloroisocyanuric acid and tribromoisocyanuric acid, diacetoxyiodoarenes such as (diacetoxyiodo)benzene, dialkyl azodicarboxylates such as diethyl azodicarboxylate, oxygen, air, and mixtures thereof.

In addition, when the oxidant and the reoxidant are used in combination, the ratio of the amount of reoxidant used to the amount of oxidant used is preferably 10 to 200 mol, more preferably 20 to 150 mol, per mole of the oxidant.

In the production method of the present invention, the reaction is preferably performed at low temperature so long as the desired reaction proceeds and the productivity is not impaired. Typically, the reaction is performed at -80°C to 120°C, more preferably 0°C to 40°C.

Although the reaction time is not particularly limited in the production method of the present invention, the reaction time is preferably 1 to 24 hours, more preferably 2 to 12 hours, most preferably 2 to 4 hours.

Although the oxidation reaction in the production method of the present invention may be performed either in the presence of a solvent or in the absence of a solvent, the reaction is preferably performed using a solvent when the oxidant or the reoxidant is solid.

When a solvent is used, the type of solvent is not particularly limited as long as the solvent does not interfere with the reaction. Examples of solvents include aliphatic hydrocarbons such as hexane, heptane, and petroleum ether, aromatic hydrocarbons such as benzene, toluene, and xylene, nitriles such as acetonitrile, propionitrile, and benzonitrile, halogenated hydrocarbons such as dichloromethane, chloroform, 1,2-dichloroethane, and carbon tetrachloride, ethers such as diethyl ether, diisopropyl ether, tetrahydrofuran, dioxane, dimethoxyethane, and diethylene glycol dimethyl ether, amides such as formamide, dimethylformamide, dimethylacetamide, and hexamethylphosphoric triamide, sulfoxides such as dimethyl sulfoxide, esters such as ethyl formate, ethyl acetate, propyl acetate, butyl acetate, and diethyl carbonate, carboxylic acids such as acetic acid, formic acid, and propionic acid, sulfolane, and water, and these may be used as a mixture. In particular, the solvent is preferably an aliphatic hydrocarbon, an aromatic hydrocarbon, a nitrile, a halogenated hydrocarbon, an ester, a carboxylic acid, water, or a mixture thereof, more preferably dichloromethane, acetonitrile, acetic acid, toluene, ethyl acetate, isopropyl acetate, water, or a mixture thereof, most preferably dichloromethane, a mixed solution of dichloromethane and water, a mixed solution of toluene and water, a mixed solution of ethyl acetate and water, acetonitrile, or acetic acid.

The production method of the present invention preferably includes, after the oxidation reaction, a quenching step for quenching the oxidant and reoxidant used in the oxidation reaction. The addition of this step can inhibit side reactions such as further oxidation of the generated aldehyde groups. Although the quencher used in the quenching step is selected as appropriate depending on the type of oxidant, one example method involves a combined use of a sodium hydrogen carbonate aqueous solution and a sodium thiosulfate aqueous solution as quenchers. Alternatively, instead of using these quenchers, the quenching step may be replaced by the removal of the oxidant, for example, by treatment with a column packed with silica gel or the like.

### WORKING EXAMPLES

The present invention will be more specifically described with reference to the Working Examples and the Comparative Examples below. However, modifications can be made as appropriate without departing from the spirit of the present invention. Therefore, the specific examples given below should not be construed as limiting the scope of the present invention.

The ¹H-NMR measurement described in the Working Examples was performed with an AVANCE-III 400 MHz (manufactured by BRUKER) using deuterated chloroform as a solvent and tetramethylsilane (TMS) as a reference substance. The values in parentheses are integral ratios.

The number average molecular weight is a value obtained by gel permeation chromatography (GPC) analysis using polystyrene as a standard substance under the following conditions:

### [Measurement Conditions]

Developing solvent: tetrahydrofuran (THF)
Flow rate: 0.6 mL/min
Detector: differential refractive index detector (RI)
Column: TSK Guardcolumn Super H-H
   TSKgel Super HM-N (6.0 mm I.D. × 15 cm × 1)
   TSKgel Super H2500 (6.0 mm I.D. × 15 cm × 1)
   (all manufactured by Tosoh Corporation)
Column temperature: 40°C
Sample injection volume: 50 µL (THF solution with concentration of 0.3% by mass)

The kinematic viscosity is a value measured at 25°C using a Cannon-Fenske viscometer in accordance with JIS Z 8803:2011. In addition, the refractive index (nD) is a value measured at 25°C using an Abbe refractometer in accordance with JIS K 0062:1992.

### <Example 1>

19.65 g (1.5 equivalents) of iodobenzene diacetate, 108.00 g of dichloromethane, and 100.00 g (0.04 mol) of a carbinol-modified (primary alcohol group-containing) silicone represented by the following formula (8) were placed into a 500 mL separable flask equipped with a thermometer, a stirrer, a reflux condenser, and a nitrogen gas inlet tube, and then 0.32 g (0.05 equivalents) of 2,2,6,6-tetramethylpiperidine N-oxyl was added with stirring at 25°C in a nitrogen atmosphere, and the mixture was reacted at 23°C for 4 hours. Subsequently, 110.00 g of a saturated aqueous solution of sodium hydrogen carbonate and 16.00 g of a 20% aqueous solution of sodium thiosulfate were added, followed by stirring for 30 minutes. The organic layer was then separated and distilled under reduced pressure at an internal temperature of 50°C to remove low-melting-point substances. Finally, the product was washed twice with 200.00 g of methanol to obtain a light yellow transparent liquid. This product was determined by ¹H-NMR to be an aldehyde-modified silicone represented by the following formula (9), and it turned out that yield: 92%, purity: 100%, kinematic viscosity: 38.7 mm²/s, refractive index: 1.4091, number average molecular weight: 4,100. The ¹H-NMR data for the compound represented by the formula (9) is given below:

### 0.00 ppm (192H), 0.52 ppm (4H), 0.89 ppm (3H), 1.31 ppm (12H), 1.62 ppm (2H), 2.41 ppm (2H), 9.78 ppm (1H)

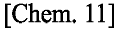

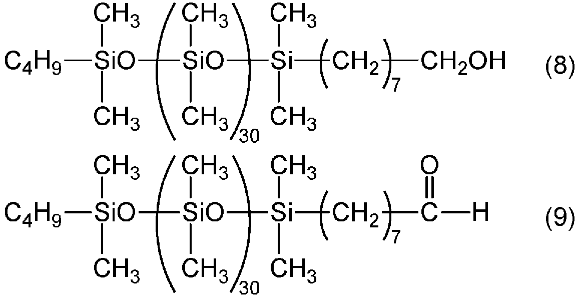

### <Working Example 2>

The same procedure as in Working Example 1 above was performed except that the carbinol-modified (primary alcohol group-containing) silicone (8) used in Working Example 1 above was replaced by a carbinol-modified (primary alcohol group-containing) silicone (10) (0.04 mol) to obtain a colorless transparent liquid. This product was determined by ¹H-NMR to be an aldehyde-modified silicone represented by the following formula (11), and it turned out that yield: 90%, purity: 100%, kinematic viscosity: 54.3 mm²/s, refractive index: 1.4083, number average molecular weight: 4,300. The ¹H-NMR data for the compound represented by the formula (11) is given below:

### 0.00 ppm (192H), 0.52 ppm (4H), 0.89 ppm (3H), 1.31 ppm (12H), 1.62 ppm (2H), 3.43 ppm (2H), 4.06 ppm (2H), 9.76 ppm (1H)

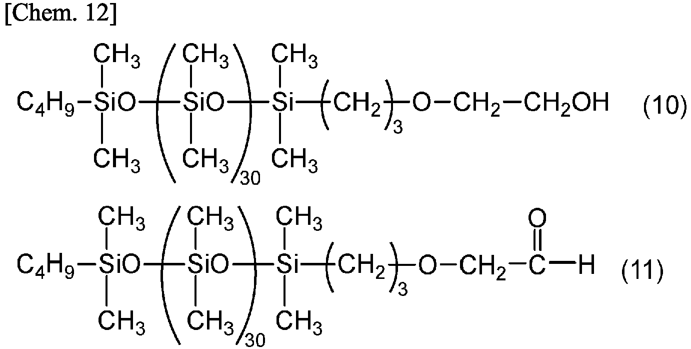

### <Working Example 3>

The same procedure as in Working Example 1 above was performed except that the carbinol-modified (primary alcohol group-containing) silicone (8) used in Working Example 1 above was replaced by a carbinol-modified (primary alcohol group-containing) silicone (12) (0.04 mol) to obtain a colorless transparent liquid. This product was determined by ¹H-NMR to be an aldehyde-modified silicone represented by the following formula (13), and it turned out that yield: 88%, purity: 100%, kinematic viscosity: 87.2 mm²/s, refractive index: 1.4077, number average molecular weight: 7,400. The ¹H-NMR data for the compound represented by the formula (13) is given below:

### 0.00 ppm (372H), 0.52 ppm (4H), 0.89 ppm (3H), 1.31 ppm (4H), 1.62 ppm (2H), 3.40 ppm (4H), 3.80 ppm (1H), 9.80 ppm (2H)

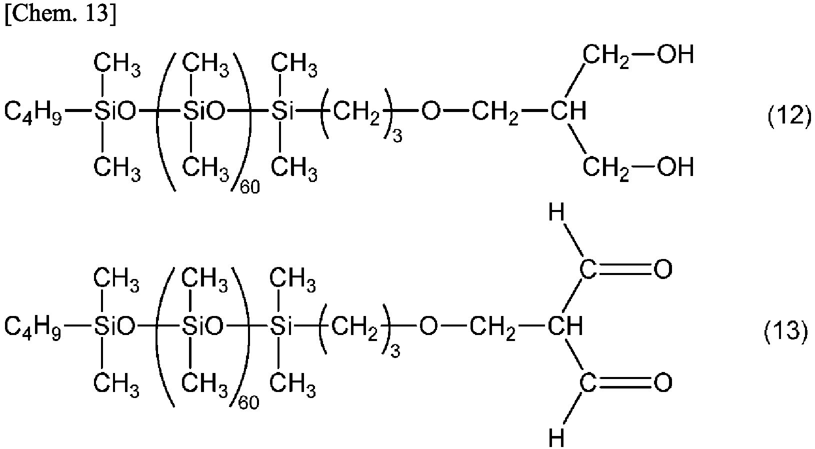

## Claims

1. An aldehyde-modified silicone having one or two aldehyde groups per molecule, the aldehyde-modified silicone being represented by the following formula (1):
[Chem. 1]
(AR¹₂SiO_{1/2})₁(R¹₃SiO_{1/2})ₐ(R¹₂SiO_{2/2})_{b}(R¹SiO_{3/2})_{c}(SiO_{4/2})_{d} (1)
wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200.

2. The aldehyde-modified silicone according to claim 1, wherein the aldehyde-modified silicone (1) is represented by the following formula (2): 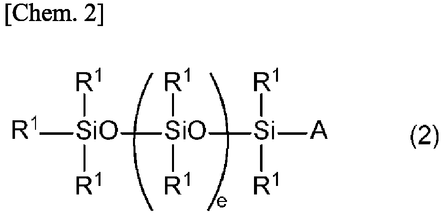 wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, and e is a number of 1 to 150.

3. The aldehyde-modified silicone according to claim 1 or 2, wherein A is a group selected from the following formulae (3) to (6): 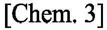 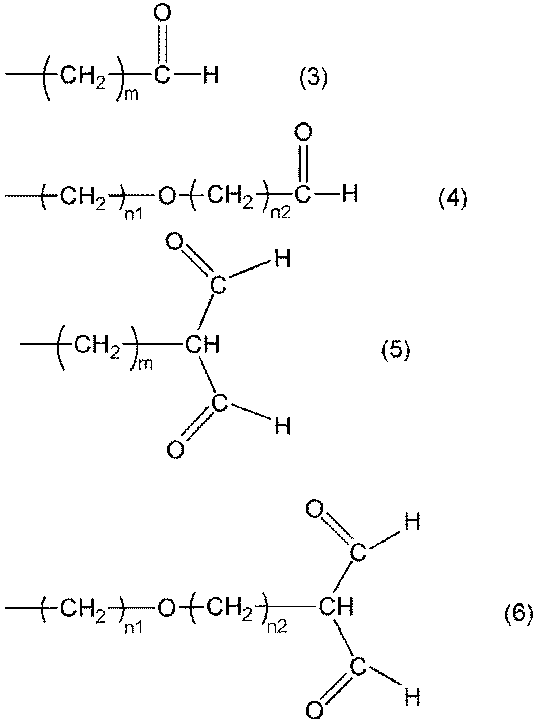 wherein m is independently a number of 2 to 20, n1 is independently a number of 3 to 8, and n2 is independently a number of 1 to 6.

4. A method for producing an aldehyde-modified silicone represented by the following formula (1):
[Chem. 4]
(AR¹₂SiO_{1/2})₁(R¹₃SiO_{1/2})ₐ(R¹₂SiO_{2/2})_{b}(R¹SiO_{3/2})_{c}(SiO_{4/2})_{d} (1)
wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200,
the method comprising oxidizing a hydroxymethyl group of a carbinol-modified silicone to produce the aldehyde-modified silicone, said carbinol-modified silicone being represented by the following formula (7):
[Chem. 5]
(A'R¹₂SiO_{1/2})₁(R¹₃SiO_{1/2})ₐ(R¹₂SiO_{2/2})_{b}(R'SiO_{3/2})_{c}(SiO_{4/2})_{d} (7)
wherein A' is a linear or branched alkylene group (-R-) or alkyleneoxyalkylene group (-R-O-R-) having 2 to 20 carbon atoms and is an organic group having one or two hydroxymethyl groups at an end thereof, R¹ is independently a group selected from an alkyl group having 1 to 10 carbon atoms, an aryl group having 6 to 10 carbon atoms, and an aralkyl group having 7 to 10 carbon atoms, a is 0 < a ≤ 3, b is 0 < b ≤ 200, c is 0 ≤ c ≤ 1, and d is 0 ≤ d ≤ 1, provided that 1 ≤ a + b + c + d ≤ 200.

5. The method for producing the aldehyde-modified silicone according to claim 4, wherein the aldehyde-modified silicone (1) is represented by the following formula (2): 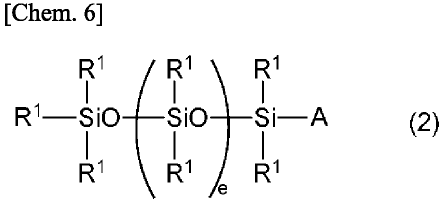 wherein A is a linear or branched alkylene group (-R-) or alkyleneoxyalkylene group (-R-O-R-) having 2 to 20 carbon atoms and is an organic group having one or two aldehyde groups at an end thereof, R¹ is independently a group selected from an alkyl group having 1 to 10 carbon atoms, an aryl group having 6 to 10 carbon atoms, and an aralkyl group having 7 to 10 carbon atoms, and e is a number of 1 to 150.

6. The method for producing the aldehyde-modified silicone according to claim 4 or 5, wherein A is a group selected from the following formulae (3) to (6): 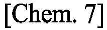 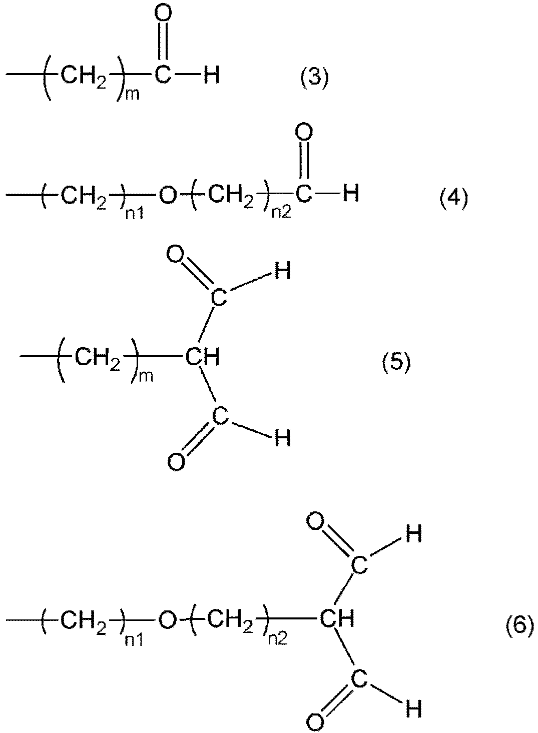 wherein m is independently a number of 2 to 20, n1 is independently a number of 3 to 8, and n2 is independently a number of 1 to 6.

7. The method for producing the aldehyde-modified silicone according to claim 4 or 5, wherein a nitroxyl radical compound is used as an oxidant.
